# EUROPEAN PATENT SPECIFICATION

(11) **EP 0 555 071 B1**
(45) Date of publication and mention of the grant of the patent: **13.11.1996**
(21) Application number: 93300796.5
(22) Date of filing: 03.02.1993
(51) Int. Cl.: B60C 9/00, B60C 9/20, B60C 15/06

(54) **Pneumatic radial tires**
Radiale Luftreifen
Bandages pneumatiques radiaux

(30) Priority: 04.02.1992 JP 18985/92; 05.02.1992 JP 20099/92; 05.02.1992 JP 20100/92
(43) Date of publication of application: 11.08.1993
(73) Proprietor: BRIDGESTONE CORPORATION, Tokyo 104 (JP)
(72) Inventor: Miyazono, Toshiya, Kodaira City, Tokyo (JP); Kohno, Yoshihide, Kodaira City, Tokyo (JP); Okamoto, Yoichi, Kodaira City, Tokyo (JP)
(74) Representative: Whalley, Kevin

(56) References cited:
- EP-A- 0 305 558
- EP-A- 0 414 470
- EP-A- 0 425 318
- EP-A- 0 470 835
- FR-A- 1 233 943
- FR-A- 1 328 156
- FR-A- 2 242 496

## Description

This invention relates to pneumatic tires, and more particularly to a pneumatic radial tire having an improved durability by improving components of the tire skeleton and its reinforcement, such as a belt serving to reinforce a tread portion, a turnup portion of a carcass ply, and a bead portion reinforcing layer serving to reinforce a bead portion.

As is well-known, the belt among the tire components serves to reinforce the tread portion and particularly acts to enhance the rigidity in the circumferential direction of the tire in the case of a pneumatic radial tire. Furthermore, the carcass ply constitutes a skeleton of the tire and its turnup portion contributes to reinforce the bead portion. Moreover, the bead portion reinforcing layer restrains collapsing of the bead portion toward a rim flange brought about by contacting with the ground for reinforcing the bead portion and is usually arranged so as to extend from adjacent the bead core or from inside of the tire around the bead core toward the outside thereof in the radial direction of the tire along the turnup portion of the carcass ply at a position beyond the turnup end.

In such tires, it is usual that a rubberized layer formed by embedding reinforcing elements such as monofilaments or cords of organic material or steel in rubber at equal spaces is used as the belt, carcass ply or bead portion reinforcing layer. These reinforcing elements are arranged at a certain inclination angle with respect to an equator of the tire in the case of the belt, at a certain inclination angle or at a right angle with respect to the equator in the case of the carcass ply, and at a certain inclination angle with respect to the reinforcing element of the carcass ply in the case of the bead portion reinforcing layer.

Among the conventional tire components containing equally spaced parallel reinforcing elements, when the component is used in the belt, rubber facing cut ends of the reinforcing elements is pierced by these reinforcing elements at the widthwise end of the belt due to the tire deformation during the contact with the ground to create fine cracking. Such cracking gradually grows between the adjoining reinforcing elements and then rapidly propagates between the mutually laminated belt layers constituting the belt to finally cause a so-called belt separation failure. The propagation rate of the cracking until the occurrence of the belt separation failure is considerably fast, which is particularly a factor for determining the durability of the radial tire.

Furthermore, when the tire component is used in the carcass ply, rubber facing cut ends of the reinforcing elements is pierced by these reinforcing elements at the turnup end of the carcass ply due to the tire deformation during the contact with the ground to create fine cracking. Such cracking gradually grows between the adjoining reinforcing elements and then rapidly propagates toward a sidewall portion and a stiffener, which is a factor for determining the durability of the bead portion.

Similarly, when the tire component is used in the bead portion reinforcing layer, rubber facing to cut ends of the reinforcing elements is pierced by these reinforcing elements at the axially outward or inward end of the bead portion reinforcing layer due to the tire deformation during the contact with the ground to create fine cracking. Such cracking gradually grows between the adjoining bead portion reinforcing layers and then rapidly propagates toward the carcass ply or the outside of the tire, which is also a factor for determining the durability of the bead portion in the tire.

Therefore, it is important to control the growth of such cracking. For this purpose, it is advantageous to widen the distance between the mutually adjoining reinforcing elements. However, it is desired to make the diameter of the reinforcing element small because reduction of tire weight is strongly demanded and also simplification of the cord used as the reinforcing element is required. As a result, in order to maintain the same level of tire strength by using reinforcing elements of smaller diameter, it is necessary to increase the end count of the reinforcing elements embedded in rubber and hence the distance between the adjoining reinforcing elements is rather narrower, which conflicts with the aim of controlling cracking growth.

It is, therefore, an aim of the present invention to effectively and adequately overcome the problem of degrading the durability of the tire due to the subsequent growth and propagation of fine cracking oreated at rubber facing the cut ends of the reinforcing elements at the widthwise end of the conventional tire component and to provide a pneumatic radial tire having improved tire components applicable for the solution of this problem.

Attention is also drawn to the disclosures of EP-A-0414470, EP-A-0425318, and EP-A-0305558.

The present invention provides a pneumatic radial tire comprising one or more tire components each comprised of a rubber-coated layer containing a given number of reinforcing elements separately arranged in parallel with each other therein, in which cut ends of the reinforcing elements are exposed at both sides of the rubber-coated layer, characterized in that the reinforcing elements corresponding to at least 30% of all reinforcing elements included in said rubber-coated layer are divided into a plurality of groups each comprised of 2-9 reinforcing elements, and a distance between mutually adjoining and opposite reinforcing elements, which are not grouped with each other, is wider than a distance between mutually adjoining reinforcing elements when all reinforcing elements included in said rubber-coated layer are arranged at equal spaces looking at a side end of the tire component.

In the tire according to the invention, the tire component includes a belt serving to reinforce a tread portion, at least one carcass ply wound around each of a pair of bead cores from an inside of the tire toward an outside thereof, and at least one bead portion reinforcing layer folded about each bead core from the inside of the tire toward the outside thereof and extending along a turnup portion of the carcass ply upward in the radial direction of the tire, as well as a belt reinforcing layer covering a part or the full width of the belt, and the like.

As the material of the reinforcing element, use may be made of any organic monofilaments, organic fiber cords, steel monofilaments and steel cords usually used in the manufacture of radial tires. As the organic monofilament or fiber cord, there may be used nylon monofilament or fiber cord, high-modulus polyethylene terephthalate monofilament or fiber cord, polyamide (a trade name or Kevlar) monofilament or fiber cord, and the like. Moreover, there may be used a combination of reinforcing elements having different diameters, a combination of reinforcing elements of different materials, and a combination of reinforcing elements having different materials and diameters.

Furthermore, the number of the reinforcing elements may be the same in the groups, or the number of the reinforcing elements may be different in the groups. Moreover, the distance between the adjoining reinforcing elements in the group may be narrower than the distance between the adjoining reinforcing elements when the reinforcing elements are separately arranged at equal spaces in the rubber-coated layer. In addition, the reinforcing elements in the group may be arranged in parallel with each other but shifted with respect to each other in up and down directions. Also, at least some of the reinforcing elements in the group may be overlapped with each other.

When all the reinforcing elements in the rubber-coated layer are divided into a plurality of identical groups containing a given number of the reinforcing elements, if a few reinforcing elements are left over from these groups in accordance with the total reinforcing element number required for the formation of the tire skeleton or its reinforcement, these remaining reinforcing elements may be arranged substantially at a spacing equal to the distance between the mutually adjoining and opposite reinforcing elements not grouped with each other.

The invention will be further described with reference to the accompanying drawings, wherein:
Fig. 1 is a diagrammatic section view of a first embodiment of a pneumatic tire for a passenger car to be tested;
Figs. 2a and 2b are schematic views partly shown in section of a first embodiment of the rubber-coated layer showing a comparative arrangement of reinforcing elements, respectively;
Figs. 3a and 3b are schematic views partly shown in section of a second embodiment of the rubber-coated layer showing a comparative arrangement of reinforcing elements, respectively;
Figs. 4a and 4b are schematic views partly shown in section of a third embodiment of the rubber-coated layer showing a comparative arrangement of reinforcing elements, respectively;
Figs. 5a and 5b are schematic views partly shown in section of a fourth embodiment of the rubber-coated layer showing a comparative arrangement of reinforcing elements, respectively;
Figs. 6a and 6b are schematic views partly shown in section of a fifth embodiment of the rubber-coated layer showing a comparative arrangement of reinforcing elements, respectively;
Figs. 7a and 7b are schematic views partly shown in section of a sixth embodiment of the rubber-coated layer showing a comparative arrangement of reinforcing elements, respectively;
Fig. 8 is a diagrammatic section view of a first embodiment of a pneumatic tire for a truck or bus to be tested;
Figs. 9a and 9b are schematic views partly shown in section of a seventh embodiment of the rubber-coated layer showing a comparative arrangement of reinforcing elements, respectively;
Fig. 10 is a diagrammatic section view of a second embodiment of a pneumatic tire for a truck or bus to be tested;
Figs. 11a and 11b are schematic views partly shown in section of an eighth embodiment of the rubber-coated layer showing a comparative arrangement of reinforcing elements, respectively;
Figs. 12a and 12b are schematic views partly shown in section of a ninth embodiment of the rubber-coated layer showing a comparative arrangement of reinforcing elements, respectively;
Figs. 13a and 13b are schematic views partly shown in section of a tenth embodiment of the rubber-coated layer showing a comparative arrangement of reinforcing elements, respectively;
Figs. 14a and 14b are schematic views partly shown in section of an eleventh embodiment of the rubber-coated layer showing a comparative arrangement of reinforcing elements, respectively;
Figs. 15a, 15b and 15c are schematic views partly shown in section of a twelfth embodiment of the rubber-coated layer showing a comparative arrangement of reinforcing elements, respectively;
Fig. 16 is a diagrammatic section view of a second embodiment of a pneumatic tire for a passenger car to be tested;
Figs. 17a and 17b are schematic views partly shown in section of a thirteenth embodiment of the rubber-coated layer showing a comparative arrangement of reinforcing elements, respectively;
Figs. 18a and 18b are schematic views partly shown in section of a fourteenth embodiment of the rubber-coated layer showing a comparative arrangement of reinforcing elements, respectively;
Fig. 19 is a diagrammatic section view of a third embodiment of a pneumatic tire for a truck or bus to be tested;
Fig. 20 is a diagrammatic section view of a fourth embodiment of a pneumatic tire for a truck or bus to be tested;
Figs. 21a and 21b are schematic views partly shown in section of a fifteenth embodiment of the rubber-coated layer showing a comparative arrangement of reinforcing elements, respectively;
Figs. 22a and 22b are schematic views partly shown in section of a sixteenth embodiment of the rubber-coated layer showing a comparative arrangement of reinforcing elements, respectively;
Figs. 23a and 23b are schematic views partly shown in section of a seventeenth embodiment of the rubber-coated layer showing a comparative arrangement of reinforcing elements, respectively;
Figs. 24a and 24b are schematic views partly shown in section of an eighteenth embodiment of the rubber-coated layer showing a comparative arrangement of reinforcing elements, respectively;
Fig. 25 is a diagrammatic section view of a third embodiment of a pneumatic tire for a passenger car to be tested;
Figs. 26a and 26b are schematic views partly shown in section of a nineteenth embodiment of the rubber-coated layer showing a comparative arrangement of reinforcing elements, respectively; and
Figs. 27a and 27b are schematic views partly shown in section of other embodiments of the rubber-coated layer showing an arrangement of reinforcing elements according to the invention, respectively.

In order to provide a rubber-coated layer comprised of reinforcing elements for use in the tire component, according to the invention, a calendered ply containing the reinforcing elements is first formed, for example by using a combination of a comb-type roll and calender rolls. In this case, the reinforcing elements are divided into plural groups each containing several reinforcing elements such as groups of two reinforcing elements by means of the comb-type roll and then coated with a rubber sheet by means of calender rolls to form a calendered ply.

If it is intended to use the calendered ply as a tire component for the reinforcement of the tire so as to incline the reinforcing elements at a certain angle with respect to the equator of the tire, the calendered ply is slantly cut in the widthwise direction of the calendered ply and then the cut plies are rejoined at their widthwise ends with each other to form a continuous rubber strip, which is wound into a coil and then supplied to a tire building step.

As previously mentioned, the rubber breakage at cut ends of the reinforcing elements in the tire component is based on the fine cracking created by repeatedly piercing the reinforcing elements into rubber facing the the cut ends of the reinforcing elements upon each tire deformation and grown along the surface of the reinforcing element. Apart from such an initial stage, when the reinforcing elements are separately arranged in parallel with each other at equal spaces according to the conventional technique, the cracking immediately starts to grow across the mutually adjoining reinforcing elements and rapidly propagates between laminated rubber-coated layers as the tire component or toward the inside or outside of the tire about the tire component to cause various separation failures, cracking and the like.

On the contrary, according to the invention, the reinforcing elements corresponding to at least 30% of all reinforcing elements included in the rubber-coated layer are divided into plural groups containing 2-9 reinforcing elements, so that the groups and the reinforcing elements not belonging to the group are incorporated in the rubber-coated layer. Therefore, the distance between the mutually adjoining and opposite reinforcing elements not grouped with each other becomes wider than the distance between the adjoining reinforcing elements when they are arranged at equal spaces. As a result, the growth of the cracking after the initial cracking stage between the adjoining reinforcing elements is delayed in accordance with the distance between the mutually adjoining and opposite reinforcing elements, whereby the rapid propagation to separation and cracking failures is effectively controlled.

As the rigidity of the reinforcing element becomes high, the occurrence of initial cracking by the piercing of the reinforcing elements at the side end of the tire component is naturally faster than that in the reinforcing elements such as nylon fiber cord or polyethylene terephthalate fiber cord. Therefore, when the invention is applied to high rigidity reinforcing elements such as Kevlar fiber cord, steel cord and the like, the effect of controlling the rapid propagation to separation failure becomes more conspicuous.

Moreover, even when only the reinforcing elements corresponding to less than 30% of all reinforcing elements included in the rubber-coated layer are divided into groups each comprised of some reinforcing elements, the distance between the mutually adjoining and opposite reinforcing elements becomes somewhat wider than the distance between the adjoining reinforcing elements when they are arranged at equal spaces, so that the occurrence of separation and cracking failures can be prevented, but it can not be said that the control effect is particularly high. Such an effect is too conspicuous when the reinforcing elements corresponding to at least 50% of all reinforcing elements included in the rubber-coated layer are divided into plural groups.

When the number of the reinforcing elements in the group is more than 9, the distance between the mutually adjoining and opposite reinforcing elements not grouped with each other can be more widened, but the unadhered portion of the cut ends of the reinforcing elements in the group becomes gradually larger to undesirably cause the propagation of cracking inside the group. Preferably, the number of the reinforcing elements in the group is 2-6.

The following examples are given in illustration of the invention and are not intended as limitations thereof.

### Example 1

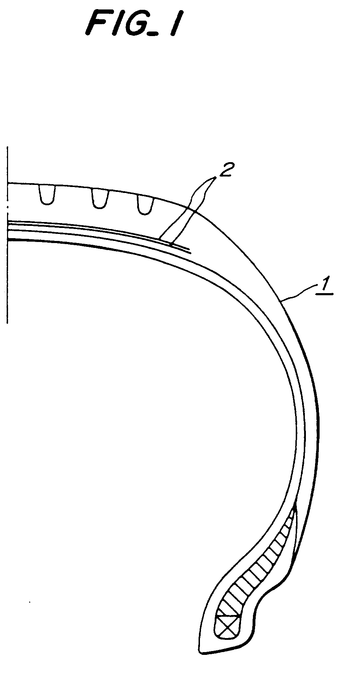

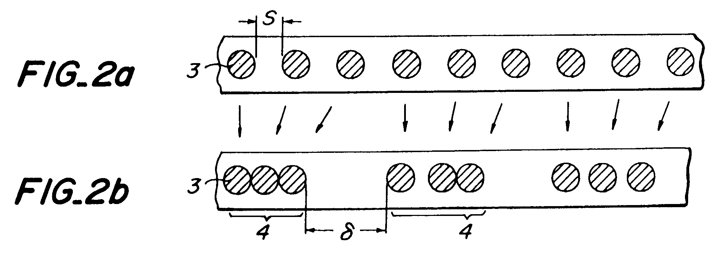

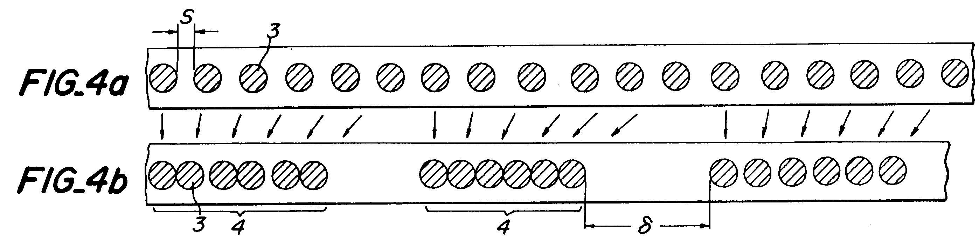

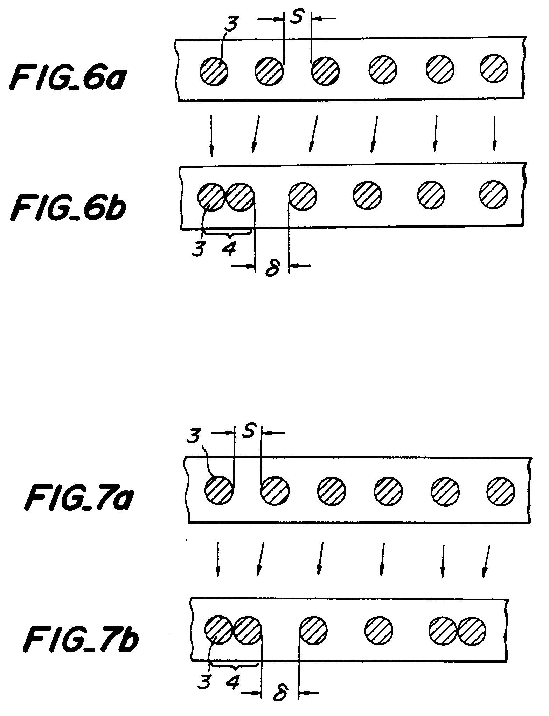

Radial tires 1 for passenger cars having a tire size of 185/70 R14 as sectionally shown in Fig. 1 are tested, in which two belt layers 2 are arranged as a belt for reinforcing a tread portion of the tire 1 and the remaining tire structure is the same as in the conventional radial tire. As each of the belt layers 2 there are used a conventional rubber-coated layer and a rubber-coated layer according to the invention having various arrangements of reinforcing elements 3 as shown in Figs. 2 to 7 and 21, respectively. Numeral 4 is a group comprised of given number of the reinforcing elements 3.

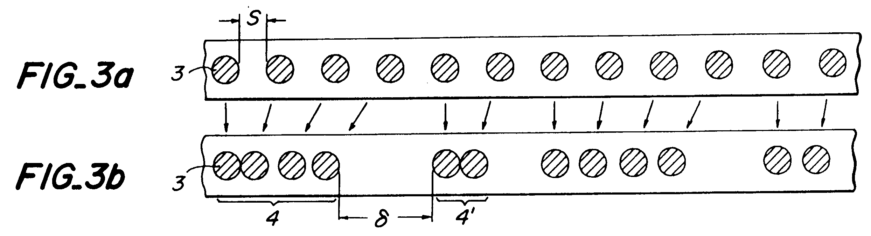

In the belt layer 2 shown in Figs. 2a to 7a and 21a, the reinforcing elements 3 are separately arranged at equal spaces S in the rubber-coated layer according to the conventional technique. In the belt layer 2 shown in Figs. 2b to 7b and 21b, the reinforcing elements 3 are divided into groups 4 each comprised of some reinforcing elements, which are arranged at a distance δ between mutually adjoining and opposite reinforcing elements not grouped with each other wider than the space S. Fig. 3b shows an embodiment of alternately arranging two kinds of groups 4, 4' containing different numbers of reinforcing elements. Moreover, there are used various reinforcing elements 3 as shown in Table 1.

In all of the test tires, the reinforcing elements 3 in the two belt layers 2 are inclined at an angle of 24° with respect to an equator of the tire and crossed with each other. Furthermore, the belt layer 2 located adjacent the tread portion has a width slightly narrower than that of the belt layer 2 located adjacent the carcass ply.

Each of these test tires 1 is run on a drum testing machine at a speed of 80 km/hr under an internal pressure of 1.9 kgf/cm² and a load of 455 kg over a distance of 60,000 km and thereafter a length of cracking created in the vicinity of the widthwise end of the belt layer 2 is measured to obtain results as shown in Table 1.

**Table 1**

| Reinforcing element | End count (elements/50 mm) | Distance S between reinforcing elements arranged at equal spaces (mm) | Distance δ between reinforcing elements not grouped with each other (mm) | Ratio of cracking length | Remarks |
|---|---|---|---|---|---|
| Kevlar cord of 1500 d/2 | 43.5 | 0.54 | - | 0.60 | Fig.2a |
| | | - | 1.62 | | Fig.2b |
| Kevlar cord of 1500 d/2 | 43.5 | 0.54 | - | 0.52 | Fig.3a |
| | | - | 2.16 | | Fig.3b |
| HM PET cord of 1500 d/2 | 59.1 | 0.07 | - | 0.71 | Fig.4a |
| | | - | 0.42 | | Fig.4b |
| Kevlar monofilament of 0.4 mm in diameter | 80.0 | 0.23 | - | 0.82 | Fig.5a |
| | | - | 0.46 | | Fig.5b |
| Kevlar cord of 1500 d/2 | 43.5 | 0.54 | - | 0.94 | Fig.6a |
| | | - | 0.65 | | Fig.6b |
| Kevlar cord of 1500 d/2 | 43.5 | 0.54 | - | 0.85 | Fig.7a |
| | | - | 0.72 | | Fig.7b |
| steel cord of 1×5×0.23 | 41.0 | 0.59 | - | 0.83 | Fig.5a |
| | | - | 1.18 | | Fig.5b |
| steel cord of 1×5×0.23 | 41.0 | 0.59 | - | 0.77 | Fig.21a |
| | | - | 1.18 | | Fig.21b |

Since the cracking created in the vicinity of the widthwise end of the belt is observed only in the belt layer located adjacent the tread portion, the measured results in Table 1 show the ratio of cracking length in only the belt layer located adjacent the tread portion. Based on this fact, it is possible to apply the rubber-coated layer according to the invention only to the belt layer located adjacent the tread portion.

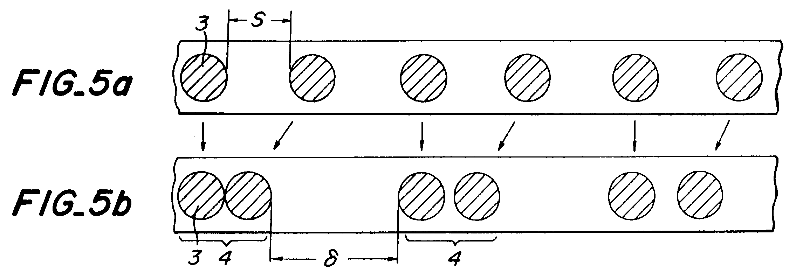

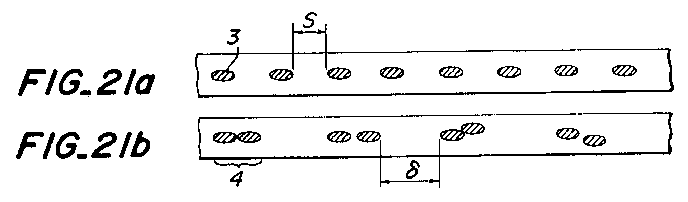

When the arrangement of the reinforcing elements is compared between Fig. 5b and Fig. 21b using the steel cord as the reinforcing element, a better result is obtained in the arrangement of Fig. 21b in which the reinforcing elements in the group are shifted in up and down directions compared to that of Fig. 5b in which the reinforcing elements are arranged straight in parallel with each other. This is due to the fact that strain of rubber facing the cut ends of the reinforcing elements by the piercing of the reinforcing elements is dispersed in the arrangement of Fig. 21b to delay the occurrence of fine cracking created in the rubber as compared with the arrangement of Fig. 5b.

### Example 2

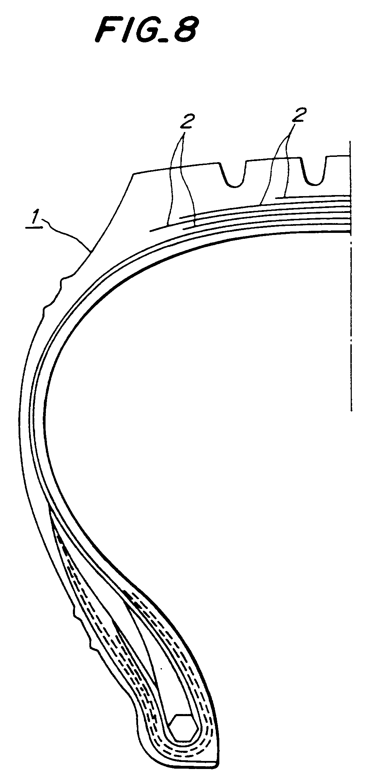

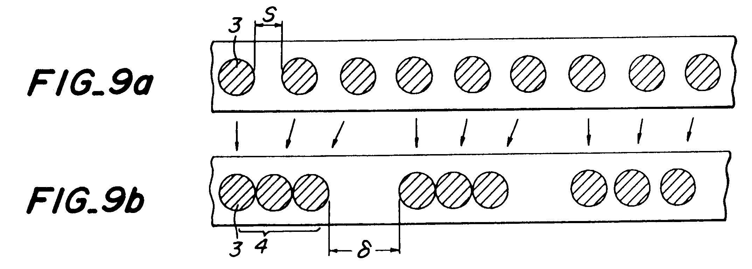

As a radial tire 1 for trucks and buses having a tire size of 10.00 R20 as shown in Fig. 8, there are provided two test tires, in which four belt layers 2 having the arrangement of the reinforcing elements as shown in Fig. 9a or 9b are arranged for reinforcing the tread portion, and the reinforcing elements in these belt layers are inclined at angles of 18° upward to the left, 18° upward to the left, 18° upward to the right and 50° upward to the right with respect to the equator of the tire, respectively, viewing from the side of the tread portion.

After each of the test tires is run on a drum testing machine at a speed of 60 km/hr under an internal pressure of 7.00 kgf/cm² and a load of 2600 kg over a distance of 100,000 km, the cracking length created in the vicinity of the widthwise end of the belt is measured to obtain results as shown in Table 2.

**Table 2**

| Reinforcing element | End count (elements /50 mm) | Distance S between reinforcing elements arranged at equal spaces (mm) | Distance δ between reinforcing elements not grouped with each other (mm) | Ratio of cracking length | Remarks |
|---|---|---|---|---|---|
| Kevlar cord of 1500 d/2 | 70.0 | 0.09 | - | 0.71 | Fig. 9a |
| | | - | 0.27 | | Fig. 9b |

The cracking created in the vicinity of the widthwise end of the belt is observed only in the second belt layer viewed from the side of the tread portion. From this fact, it is apparent that the rubber-coated layer according to the invention can be applied only to the second belt layer viewed from the side of the tread portion.

### Example 3

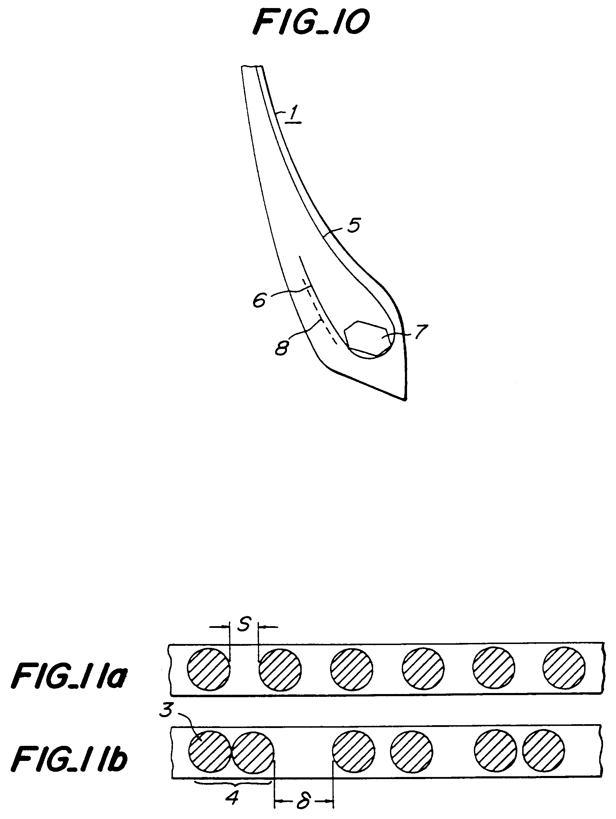

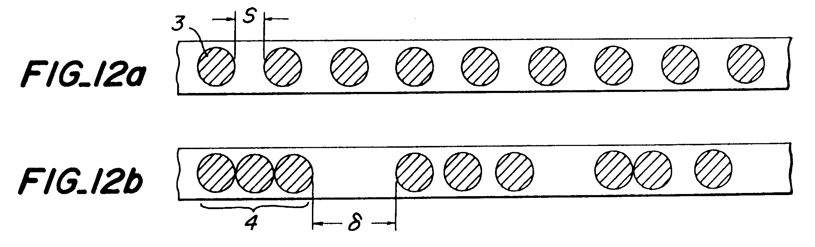

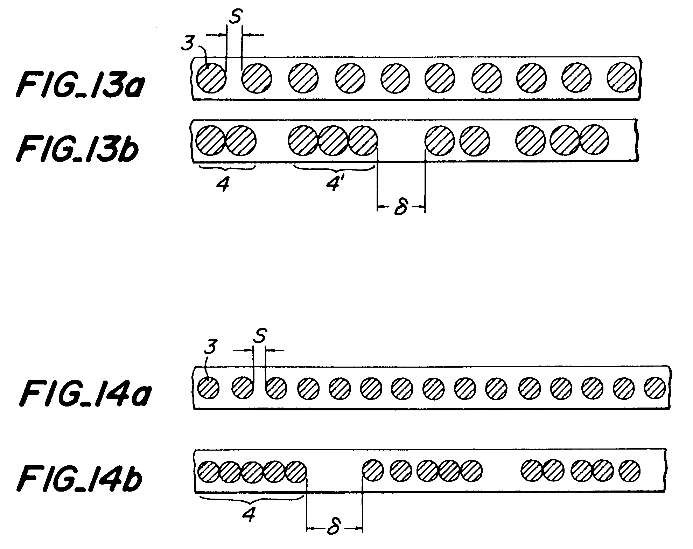

As a radial tire 1 for trucks and buses having a tire size of 11/70 R22.5 as shown in Fig. 10, there are provided eleven test tires in which a carcass ply 5 having the arrangement of the reinforcing elements as shown in Figs. 11 to 15 is wound around a bead core 7 from the inside of the tire toward the outside thereof to form a turnup portion 6. Numeral 8 is a bead portion reinforcing layer. Furthermore, the tire structure other than the carcass ply is substantially the same as in the conventional radial tire. Moreover, there are used various reinforcing elements 3 as shown in Tables 3 and 4.

Each of these test tires is run on a drum testing machine at a speed of 80 km/hr under an internal pressure of 8.0 kgf/cm² and a load of 3000 kg, during which a running distance until the occurrence of cracking in the carcass ply is measured to obtain results as shown in Tables 3 and 4.

**Table 3**

| Reinforcing element | End count (elements /50 mm) | Distance S between reinforcing elements arranged at equal spaces (mm) | Distance δ between reinforcing elements not grouped with each other (mm) | Ratio of running distance | Remarks |
|---|---|---|---|---|---|
| steel cord of 3+9+15×0.175 | 27.56 | 0.75 | - | 1.23 | Fig.11a |
| | | - | 1.50 | | Fig.11b |
| steel cord of 3+9×0.23 | 30.28 | 0.71 | - | 1.59 | Fig.12a |
| | | - | 2.13 | | Fig.12b |
| steel cord of 1×5×0.25 | 47.43 | 0.37 | - | 1.20 | Fig.13a |
| | | - | 0.93 | | Fig.13b |
| steel cord of 1×4×0.25 | 59.29 | 0.26 | - | 1.60 | Fig.14a |
| | | - | 1.30 | | Fig.14b |
| steel monofilament of 0.3mm in diameter | 102.5 | 0.19 | - | 1.37 | Fig.14a |
| | | - | 0.94 | | Fig.14b |
| Kevlar monofilament of 0.4mm in diameter | 99.5 | 0.10 | - | 1.10 | Fig.14a |
| | | - | 0.51 | | Fig.14b |
| Kevlar cord of 1500 d/2 | 54.0 | 0.30 | - | 1.66 | Fig.14a |
| | | - | 1.48 | | Fig.14b |

**Table 4**

| Reinforcing element | End count (elements/50 mm) | Distance S between reinforcing elements arranged at equal spaces (mm) | Distance δ between reinforcing elements not grouped with each other (mm) | Ratio of running distance | Remarks |
|---|---|---|---|---|---|
| steel cord of 3+9×0.23 | 35.30 | 0.48 | - | 1.16 | Fig.15a |
| | | - | 0.64 | | Fig.15b |
| steel cord of 3+9×0.23 | 35.30 | 0.48 | - | 1.08 | Fig.15a |
| | | - | 0.60 | | Fig.15c |
| steel monofilament of 0.3mm in diameter | 96.0 | 0.22 | - | 1.11 | Fig.15a |
| | | - | 0.29 | | Fig.15b |
| Kevlar monofilament of 0.4mm in diameter | 93.2 | 0.14 | - | 1.10 | Fig.15a |
| | | - | 0.18 | | Fig.15b |
| Kevlar cord of 1500 d/2 | 50.7 | 0.36 | - | 1.14 | Fig.15a |
| | | - | 0.48 | | Fig.15b |

### Example 4

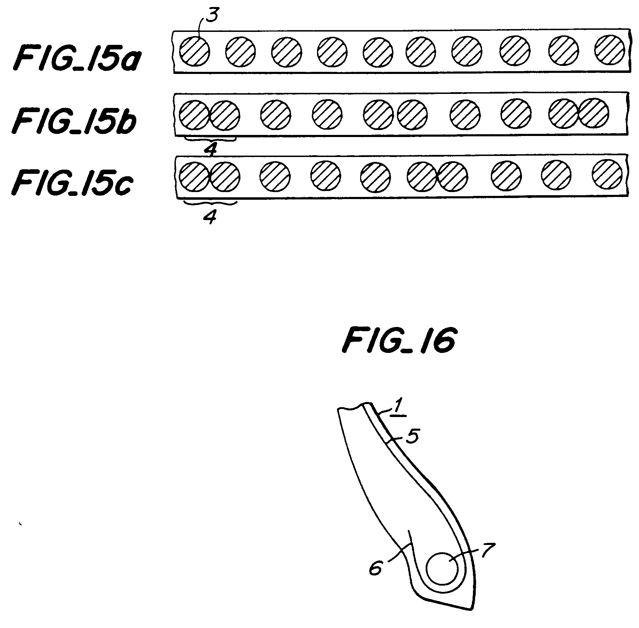

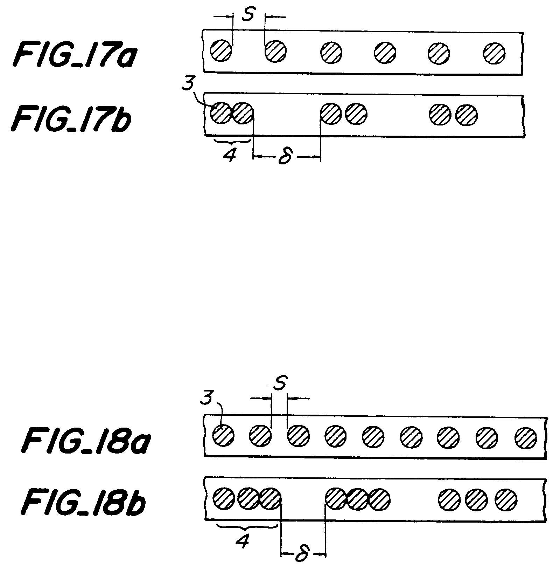

As a radial tire 1 for passenger cars having a tire size of P235/75 SR15 as shown in Fig. 16, there are provided four test tires in which a carcass ply 5 having the arrangement of the reinforcing elements as shown in Figs. 17 and 18 is wound around a bead core 7 from the inside of the tire toward the outside thereof to form a turnup portion 6. Furthermore, the tire structure other than the carcass ply is substantially the same as in the conventional radial tire. Moreover, there are used various reinforcing elements 3 as shown in Table 5.

Each of these test tires is run on a drum testing machine at a speed of 60 km/hr under an internal pressure of 2.0 kgf/cm² and a load of 1450 kg, during which a running distance until the occurrence of cracking in the carcass ply is measured to obtain results as shown in Table 5.

**Table 5**

| Reinforcing element | End count (elements/ 50 mm) | Distance S between reinforcing elements arranged at equal spaces (mm) | Distance δ between reinforcing elements not grouped with each other (mm) | Ratio of running distance | Remarks |
|---|---|---|---|---|---|
| nylon-6,6 monofilament of 0.5mm in diameter | 39.08 | 0.78 | - | 1.29 | Fig.17a |
| | | - | 1.56 | | Fig.17b |
| SR II PET cord of 1000 d/2 | 53.4 | 0.41 | - | 1.50 | Fig.18a |
| | | - | 1.23 | | Fig.18b |
| steel monofilament of 0.23mm in diameter | 49.8 | 0.77 | - | 1.68 | Fig.17a |
| | | - | 1.54 | | Fig.17b |
| Kevlar monofilament of 0.4mm in diameter | 36.3 | 0.98 | - | 1.56 | Fig.17a |
| | | - | 1.96 | | Fig.17b |
| Kevlar cord of 1500 d/2 | 33.7 | 0.85 | - | 1.65 | Fig.17a |
| | | - | 1.70 | | Fig.17b |

### Example 5

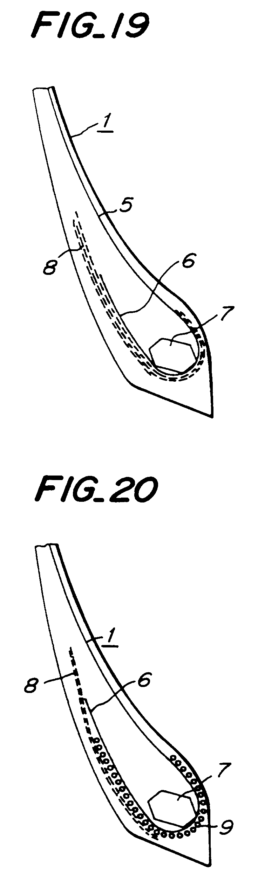

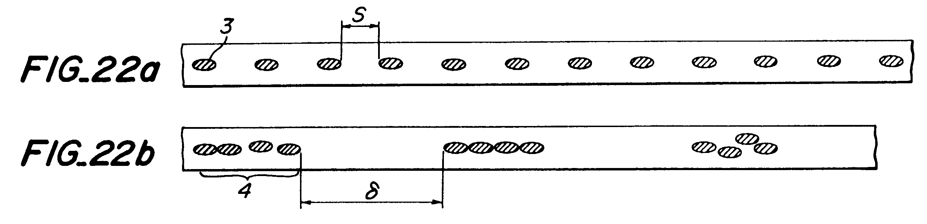

As a radial tire 1 for trucks and buses having a tire size of 11/70 R22.5 as shown in Fig. 19 or 20, there are provided eight test tires in which a rubber-coated layer having the arrangement of the reinforcing elements as shown in Fig. 5 or Figs. 21 to 24 is used as a bead portion reinforcing layer 8. In the tire of Fig. 20, numeral 9 is an additional reinforcing layer of steel cords reinforcing the carcass ply 5. Furthermore, the tire structure other than the bead portion reinforcing layer is substantially the same as in the conventional radial tire. Moreover, there are used various reinforcing elements 3 as shown in Table 6.

Each of these test tires is run on a drum testing machine at a speed of 60 km/hr under an internal pressure of 7.5 kgf/cm² and a load of 3000 kg over a distance of 60,000 km, and thereafter the cracking length created in the vicinity of the outward end of the bead portion reinforcing layer 8 in the radial direction of the tire is measured to obtain results as shown in Table 6.

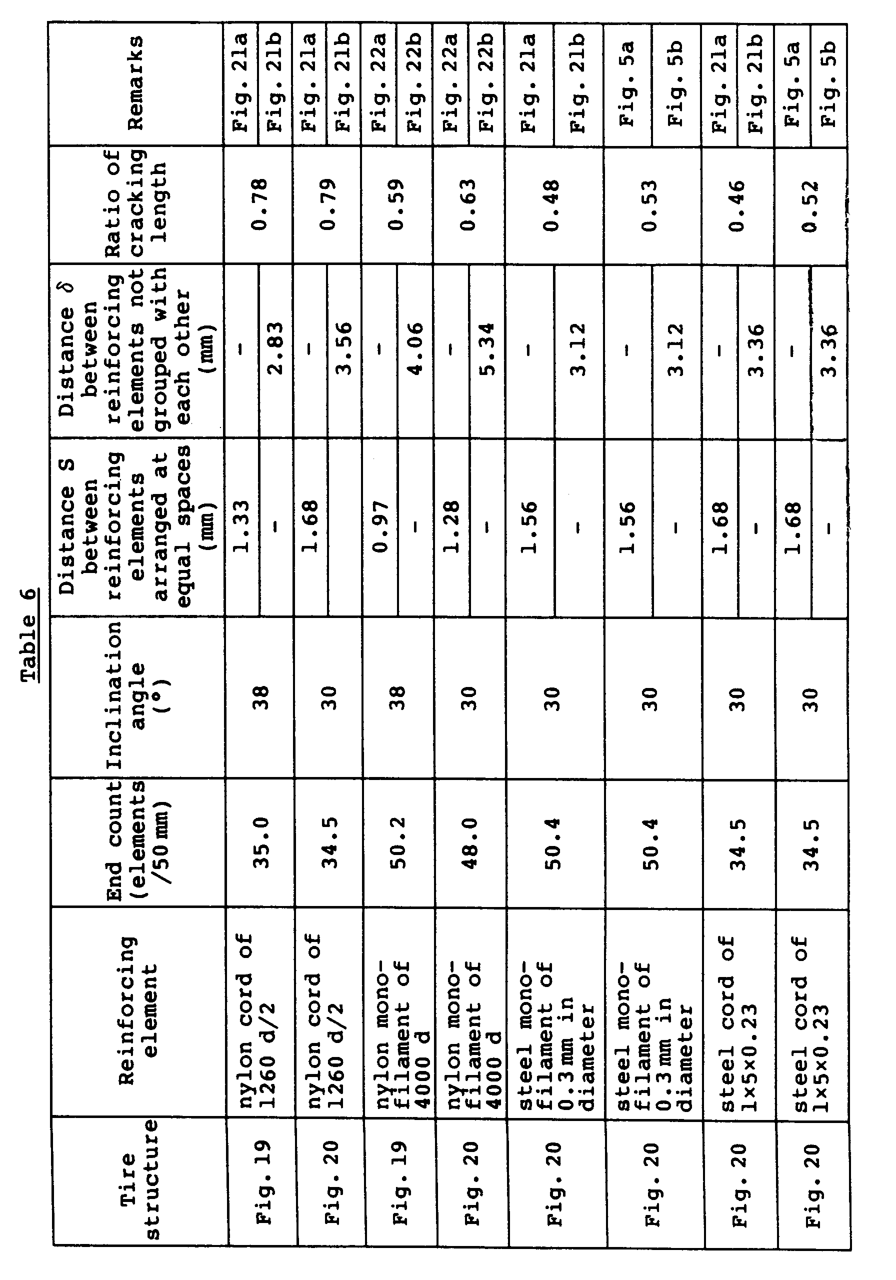

When the arrangement of the reinforcing elements is compared between Fig. 5b and Fig. 21b using the steel cord as the reinforcing element, a better result is obtained in the arrangement of Fig. 21b in which the reinforcing elements in the group are shifted in up and down directions compared to that of Fig. 5b in which the reinforcing elements are arranged straight in parallel with each other. This is due to the fact that strain of rubber facing the cut ends of the reinforcing elements by the piercing of the reinforcing elements is dispersed in the arrangement of Fig. 21b to delay the occurrence of fine cracking created in the rubber as compared with the arrangement of Fig. 5b.

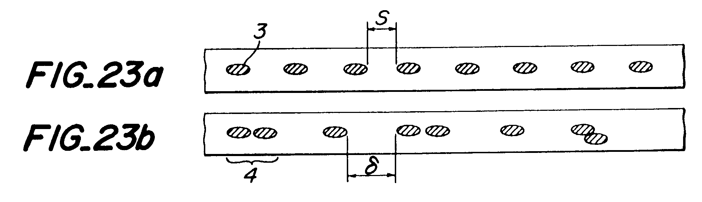

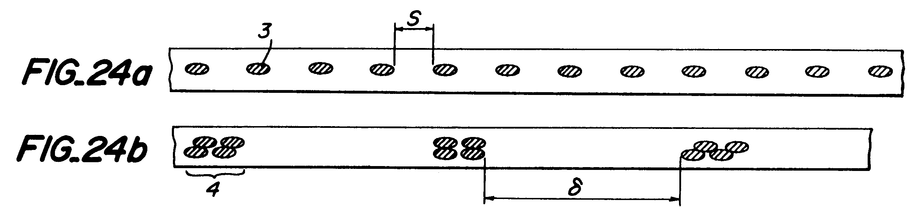

Moreover, similar results are obtained in respect of the arrangement of the reinforcing elements 3 as shown in Figs. 23 and 24.

### Example 6

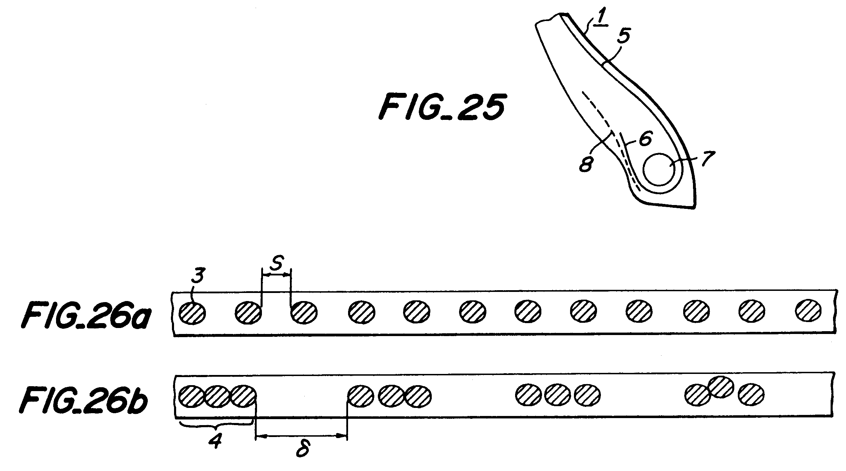

As a radial tire 1 for passenger cars having a tire size of 195/75 R14 as shown in Fig. 25, there are provided four test tires in which a rubber-coated layer having the arrangement of the reinforcing elements as shown in Fig. 26 is used as a bead portion reinforcing layer 8. Furthermore, the tire structure other than the bead portion reinforcing layer is substantially the same as in the conventional radial tire. Moreover, there are used various reinforcing elements 3 as shown in Table 7.

Each of these test tires is run on a drum testing machine at a speed of 80 km/hr under an internal pressure of 2.0 kgf/cm² and a load of 600 kg over a distance of 60,000 km, and thereafter the cracking length created in the vicinity of the outward end of the bead portion reinforcing layer 8 in the radial direction of the tire is measured to obtain results as shown in Table 7.

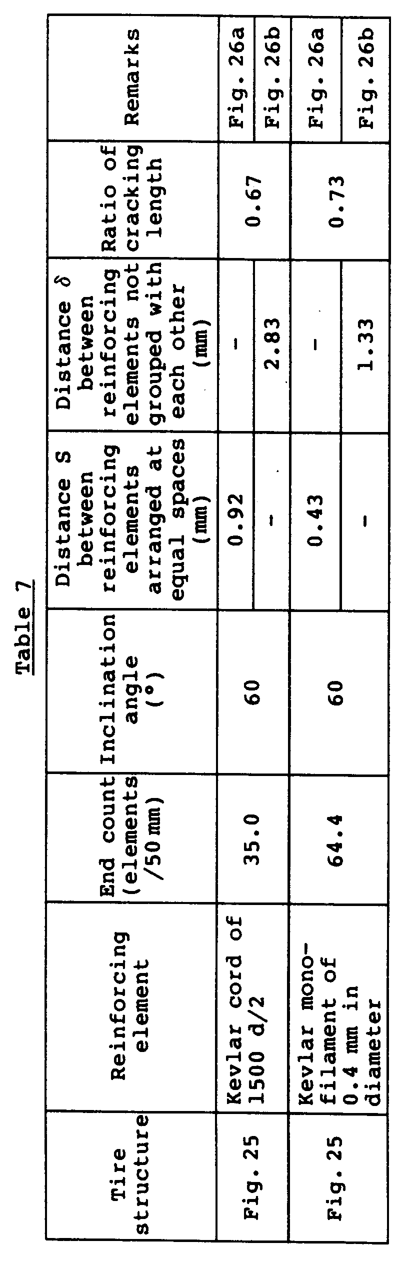

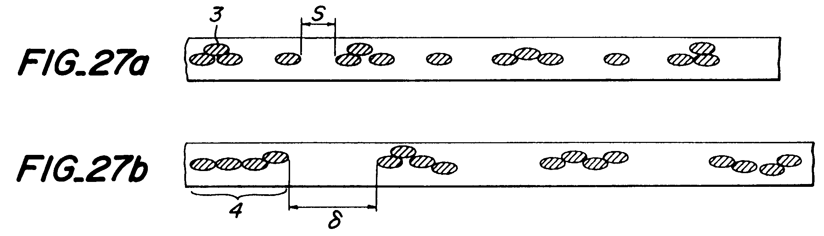

Moreover, similar results are obtained respect of the arrangement of the reinforcing elements 3 as shown in Figs. 27a and 27b.

As mentioned above, the invention can effectively prevent the growth and propagation of cracking created in the vicinity of cut ends of the reinforcing elements in tire components, causing separation failure at the widthwise end of the tire component, in pneumatic radial tires.

## Claims

1. A pneumatic radial tire (1) comprising one or more tire components each comprised of a rubber-coated layer containing a given number of reinforcing elements (3) separately arranged in parallel with each other therein, in which cut ends of the reinforcing elements are exposed at both sides of the rubber-coated layer, characterized in that the reinforcing elements corresponding to at least 30% of all reinforcing elements included in said rubber-coated layer are divided into a plurality of groups (4) each comprised of 2-9 reinforcing elements, and a distance between mutually adjoining and opposite reinforcing elements, which are not grouped with each other, is wider than a distance between mutually adjoining reinforcing elements when all reinforcing elements included in said rubber-coated layer are arranged at equal spaces looking at a side end of the tire component.

2. A pneumatic radial tire as claimed in claim 1, characterized in that said tire component is selected from a belt (2) serving to reinforce a tread portion, a carcass ply (5) wound around each of a pair of bead cores (7) from an inside of the tire toward an outside thereof, and a bead portion reinforcing layer (8) folded about each of the bead cores (7) from the inside of the tire toward the outside thereof and extending along a turnup portion (6) of the carcass ply (5) upward in the radial direction of the tire.

3. A pneumatic radial tire as claimed in claim 2, characterized in that said reinforcing element in the belt (2) is an organic monofilament or organic fiber cord.

4. A pneumatic radial tire as claimed in claim 2, characterized in that said reinforcing element in the carcass ply (5) is an organic monofilament or organic fiber cord.

5. A pneumatic radial tire as claimed in claim 2, characterized in that said reinforcing element in the carcass ply (5) is a steel monofilament or steel cord.

6. A pneumatic radial tire as claimed in claim 2, characterized in that said reinforcing element in the bead portion reinforcing layer (8) is an organic monofilament or organic fiber cord.

7. A pneumatic radial tire as claimed in any of claims 1 to 6, characterized in that the number of the reinforcing elements is the same in said groups.

8. A pneumatic radial tire as claimed in any of claims 1 to 6, characterized in that the number of the reinforcing elements is different in said groups.

9. A pneumatic radial tire as claimed in any of claims 1 to 6, characterized in that a distance between the adjoining reinforcing elements in said group is narrower than the distance between the adjoining reinforcing elements when all reinforcing elements included in said rubber-coated layer are arranged at equal spaces.

10. A pneumatic radial tire as claimed in claim 9, characterized in that at least some of the adjoining reinforcing elements in said group contact each other.

11. A pneumatic radial tire as claimed in claim 9, characterized in that at least some of the reinforcing elements in said group are shifted with respect to each other in up and down directions.

12. A pneumatic radial tire as claimed as claimed in claim 9, characterized in that at least some of the reinforcing elements in said group are overlapped with each other in up and down directions.

## Patentansprüche

1. Radialer Luftreifen (1), mit einer oder mehreren Reifenkomponenten, von denen jede aus einer gummibeschichteten Schicht besteht, die eine vorgegebene Anzahl von Verstärkungselementen (3) enthält, die darin parallel zueinander getrennt angeordnet sind, wobei die abgeschnittenen Enden der Verstärkungselemente auf beiden Seiten der gummibeschichteten Schicht freiliegen, dadurch gekennzeichnet, daß die Verstärkungselemente, die mindestens 30% aller in der gummibeschichteten Schicht eingeschlossenen Verstärkungselemente entsprechen, in eine Vielzahl von Gruppen (4) unterteilt sind, von denen jede aus 2-9 Verstärkungselementen besteht, und der Abstand zwischen benachbarten und einander gegenüberliegenden Verstärkungselementen, die keine Gruppe miteinander bilden, größer ist als der Abstand, der sich zwischen benachbarten Verstärkungselementen ergibt. wenn alle in der gummibeschichteten Schicht eingeschlossenen Verstärkungselemente, bei Betrachtung eines seitlichen Endes der Reifenkomponente, mit gleichem Zwischenraum angeordnet sind.

2. Radialer Luftreifen gemäß Anspruch 1, dadurch gekennzeichnet, daß die Reifenkomponente ausgewählt wird aus einem Gürtel (2), der dazu dient, einen Laufflächenbereich zu verstärken, einer Karkassenlage (5), die von der Innenseite des Reifens nach der Außenseite des Reifens um jeden von zwei Wulstkernen (7) geschlungen ist, und einer Wulstbereich-Verstärkungsschicht (8), die von der Innenseite des Reifens nach der Außenseite des Reifens um jeden der Wulstkerne (7) gelegt ist und sich längs eines Umstülpbereichs (6) der Karkassenlage (5) in der radialen Richtung des Reifens nach oben erstreckt.

3. Radialer Luftreifen gemäß Anspruch 2, dadurch gekennzeichnet, daß das Verstärkungselement in dem Gürtel (2) ein organisches Monofilament oder ein Cordfaden aus einer organischen Faser ist.

4. Radialer Luftreifen gemäß Anspruch 2, dadurch gekennzeichnet, daß das Verstärkungselement in der Karkassenlage (5) ein organisches Monofilament oder ein Cordfaden aus einem organischen Faser Ist,

5. Radialer Luftreifen gemäß Anspruch 2, dadurch gekennzeichnet, daß das Verstärkungselement in der Karkassenlage (5) ein Stahlmonofilament oder ein Stahlcordfaden ist.

6. Radialer Luftreifen gemäß Anspruch 2, dadurch gekennzeichnet, daß das Verstärkungselement in der Wulstbereich-Verstärkungsschicht (8) ein organisches Monofilament oder ein Cordfaden aus einer organischen Faser ist.

7. Radialer Luftreifen gemäß irgendeinem der Ansprüche 1 bis 6, dadurch gekennzeichnet, daß die Anzahl der Verstärkungselemente in den Gruppen gleich ist.

8. Radialer Luftreifen gemäß irgendeinem der Ansprüche 1 bis 6, dadurch gekennzeichnet, daß die Anzahl der Verstärkungselemente in den Gruppen verschieden ist.

9. Radialer Luftreifen gemäß irgendeinem der Ansprüche 1 bis 6, dadurch gekennzeichnet, daß der Abstand zwischen den benachbarten Verstärkungselementen in der Gruppe kleiner ist als der Abstand, der sich zwischen den benachbarten Verstärkungselementen ergibt, wenn alle in der gummibeschichteten Schicht eingeschlossenen Verstärkungselemente mit gleichem Zwischenraum angeordnet sind.

10. Radialer Luftreifen gemäß Anspruch 9, dadurch gekennzeichnet, daß mindestens einige der benachbarten Verstärkungselemente in der Gruppe einander berühren.

11. Radialer Luftreifen gemäß Anspruch 9, dadurch gekennzeichnet, daß mindestens einige der Verstärkungselemente in der Gruppe in der Aufwärts- und Abwärtsrichtung relativ zueinander verschoben sind.

12. Radialer Luftreifen gemäß Anspruch 9, dadurch gekennzeichnet, daß mindestens einige der Verstärkungselemente in der Gruppe in der Aufwärts- und Abwärtsrichtung einander überlappen.

## Revendications

1. Bandage pneumatique radial (1) comprenant un ou plusieurs composants du pneumatique, composé chacun d'une couche revêtue de caoutchouc contenant un nombre défini d'éléments de renforcement (3), qui y sont agencés séparément et parallèlement les uns aux autres, les extrémités de coupe des éléments de renforcement étant exposées au niveau des deux côtés de a couche revêtue de caoutchouc, caractérisé en ce que les éléments de renforcement correspondant à au moins 30% de tous les éléments de renforcement inclus dans ladite couche revêtue de caoutchouc sont divisés en plusieurs groupes (4), composé chacun de 2 à 9 éléments de renforcement, et en ce qu'une distance entre les éléments de renforcement mutuellement adjacents et opposés, non groupés les uns avec les autres, est supérieure à une distance entre les éléments de renforcement mutuellement adjacents lorsque tous les éléments de renforcement inclus dans ladite couche revêtue de caoutchouc sont agencés à des espacements égaux vu d'une extrémité latérale du composant du pneumatique.

2. Bandage pneumatique radial selon la revendication 1, caractérisé en ce que ledit composant du pneumatique est choisi parmi une ceinture (1), servant à renforcer une partie de bande de roulement, une nappe de carcasse (5), enroulée autour de chacune d'une paire de tringles (7), d'un côté intérieur du pneumatique vers un côté extérieur correspondant, et une couche de renforcement de la partie de talon (8) repliée autour de chacune des tringles (7), de l'intérieur du pneumatique vers l'extérieur de celui-ci, et s'étendant le long une partie retournée (6) de la nappe de carcasse (5), vers le haut dans la direction radiale du pneumatique.

3. Bandage pneumatique radial selon la revendication 2, caractérisé en ce que ledit élément de renforcement dans la ceinture (2) est un monofilament organique ou un câblé de fibres organiques.

4. Bandage pneumatique radial selon la revendication 2, caractérisé en ce que ledit élément de renforcement dans la nappe de carcasse (5) est un monofilament organique ou un câblé de fibres organiques.

5. Bandage pneumatique radial selon la revendication 2, caractérisé en ce que ledit élément de renforcement dans la nappe de carcasse (5) est un monofilament en acier ou un câblé en acier.

6. Bandage pneumatique radial selon la revendication 2, caractérisé en ce que ledit élément de renforcement dans la couche de renforcement de la partie de talon (8) est un monofilament organique ou un câblé de fibres organiques.

7. Bandage pneumatique radial selon l'une quelconque des revendications 1 à 6, caractériseé en ce que le nombre des éléments de renforcement est le même dans lesdits groupes.

8. Bandage pneumatique radial selon l'une quelconque des revendications 1 à 6, caractérisé en ce que le nombre des éléments de renforcement est différent dans lesdits groupes.

9. Bandage pneumatique radial selon l'une quelconque des revendications 1 à 6, caractérisé en ce qu'une distance entre les éléments de renforcement adjacents dans ledit groupe est inférieure à la distance entre les éléments de renforcement adjacents lorsque tous les éléments de renforcement inclus dans ladite couche revêtue de caoutchouc sont agencés à des espacements égaux.

10. Bandage pneumatique radial selon la revendication 9, caractérisé en ce qu'au moins certains des éléments de renforcement adjacents dans ledit groupe se contactent les uns les autres.

11. Bandage pneumatique radial selon la revendication 9, caractérisé en ce cqu'au moins certains des éléments de renforcement dans ledit groupe sont décalés les uns par rapport aux autres dans des directions allant vers le haut et vers le bas.

12. Bandage pneumatique radial selon la revendication 9, caractérisé en ce qu'au moins certains des éléments de renforcement dans ledit groupe se chevauchent les uns les autres dans les directions allant vers le haut et vers le bas.
